(19) Europäisches Patentamt
European Patent Office
Office européen des brevets

(11) EP 1 319 673 A1

(12) **EUROPÄISCHE PATENTANMELDUNG**

(43) Veröffentlichungstag:
**18.06.2003 Patentblatt 2003/25**

(51) Int Cl.7: **C08F 8/30**, C08F 8/42, C08C 19/42

(21) Anmeldenummer: **02026830.6**

(22) Anmeldetag: **29.11.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **12.12.2001 DE 10160849**

(71) Anmelder: **BAYER AG**
**51368 Leverkusen (DE)**

(72) Erfinder:
- **Grün Michael, Dr.**
  **53721 Siegburg (DE)**
- **Braubach, Wilfried**
  **42659 Solingen (DE)**

(54) **Polymere, die durch funktionelle Gruppen modifiziert sind**

(57) Gegenstand der vorliegenden Erfindung sind durch funktionelle Endgruppen modifizierte Polymere auf Basis von konjugierten Dienen oder von konjugierten Dienen und vinylaromatischen Verbindungen, ein Verfahren zu deren Herstellung sowie deren Verwendung zur Herstellung von Kautschukformkörpern aller Art, insbesondere zur Herstellung von Reifen und Reifenbauteilen, wie Reifenlaufflächen.

EP 1 319 673 A1

## Beschreibung

Gegenstand der vorliegenden Erfindung sind durch funktionelle Endgruppen modifizierte Polymere auf Basis von konjugierten Dienen oder von konjugierten Dienen und vinylaromatischen Verbindungen, ein Verfahren zu deren Herstellung sowie deren Verwendung zur Herstellung von Kautschukformkörpern aller Art, insbesondere zur Herstellung von Reifen und Reifenbauteilen, wie Reifenlaufflächen.

Es ist bekannt, insbesondere um die physikalischen Eigenschaften der im Reifenbau verwendeten Kautschuke zu verbessern, diese in verschiedenster Weise zu modifizieren, beispielsweise durch Einführung bestimmter Endgruppen oder durch Modifizierung des inneren Aufbaus der Polymermoleküle. Durch die Modifizierung der Polymere, beispielsweise durch Einführung bestimmter Endgruppen, sollen, wie erwähnt, die physikalischen Eigenschaften, beispielsweise der Rollwiderstand oder die Nassrutscheigenschaften verbessert werden, um die Treibstoffkosten bei den Automobilen zu senken und deren Sicherheit, insbesondere bei Nässe, zu erhöhen. Darüber hinaus sollte die Anbindung der im Reifenbau einzusetzenden Kautschuke an die dort verwendeten Füllstoffe, insbesondere an die hellen Füllstoffe, wie Kieselsäure, wesentlich verbessert werden, damit ein fester Verbund zwischen der Kautschukmatrix und dem Füllstoff zu Stande kommt. Weiterhin soll durch die Einführung bestimmter funktioneller Gruppen in den Polymermolekülen die Verarbeitung solcher, insbesondere mit hellen Füllstoffen versetzten Polymere beziehungsweise Kautschuke in den entsprechenden Verarbeitungsmaschinen verbessert werden. In der Britischen Patentanmeldung GB 2 117 778-A und in der Europäischen Patentanmeldung 0 180 853 A werden Methoden zur Modifizierung von ungesättigten Polymeren mit beispielsweise aromatischen Ketonen oder bestimmten Aminoaldehyden oder Aminoketonen beschrieben. Durch die Einführung entsprechender Endgruppen in die ungesättigten Polymeren wird insbesondere eine gute Balance zwischen Rollwiderstand und Nassrutschfestigkeit im Reifenkautschuk erreicht.

In der Europäischen Patentanmeldung EP 0 767 179 A2 wird ein Verfahren zur Herstellung von Kautschukmischungen beschrieben, die durch bestimmte Silicium-organische Verbindungen in der Endgruppe modifiziert sind. Durch die Endgruppen-Modifizierung der entsprechenden Kautschuke soll eine bessere Anbindung der Kautschuke an die aus Kieselsäure bestehenden Füllstoffe bewirkt werden.

Wie bei eigenen Versuchen festgestellt wurde, sind die in der genannten Europäischen Patentanmeldung beschriebenen Silicium-organischen Verbindungen, die zur Modifizierung der Kautschuke dienen sollen, nicht so stabil, als dass sie einen Angriff von Polymeranionen widerstehen könnten. Dies bedeutet, dass die gemäß der Europäischen Patentanmeldung zur Modifizierung der Kautschuke eingesetzten Silicium-organischen Verbindungen nicht nur zu einer Endgruppenmodifizierung der Kautschuke führen, sondern auch in hohem Maße zu nicht erwünschten mehrfachen Kopplungsreaktionen der vorhandenen Polymeranionen.

Ziel der vorliegenden Erfindung ist es, durch funktionelle Endgruppen modifizierte Polymere auf Basis von konjugierten Dienen oder von konjugierten Dienen und vinylaromatischen Verbindungen zur Verfügung zu stellen, die insbesondere Verbesserungen hinsichtlich der Verarbeitungseigenschaften verbunden mit verbesserten physikalischen und dynamischen Eigenschaften aufweisen und daher ein ausgewogeneres Verhältnis von Nassrutschfestigkeit und Rollwiderstand bei den Reifenkautschuken mit sich bringen.

Gegenstand der vorliegenden Erfindung sind daher durch funktionelle Endgruppen modifizierte Polymere auf Basis von konjugierten Dienen oder von konjugierten Dienen und vinylaromatischen Verbindungen mit einem mittleren Molekulargewicht ($M_w$) von größer als 10 000 g/mol, einer Molekulargewichtsverteilung ($M_n/M_w$) von 1,3 bis 5 und mit funktionellen Endgruppen, die sich von Verbindungen der Formel (I)

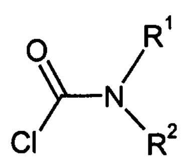

(I),

worin

$R^1$ und $R^2$ gleich oder verschieden sind und für Wasserstoff, für lineare oder verzweigte Alkylgruppen mit 1 bis 15 Kohlenstoffatomen, für Arylgruppen mit 6 bis 10 Kohlenstoffatomen, für Cycloalkylgruppen mit 5 bis 10 Kohlenstoffatomen, für Aralkylgruppen mit 1 bis 4 Kohlenstoffatomen im Alkylteil und 6 bis 10 Kohlenstoffatomen im Arylteil stehen oder worin

$R^1$ und $R^2$ zusammen mit dem Stickstoffatom einen heterocyclischen Ring bilden, der 2 bis 10 Kohlenstoffatome enthält, und zusätzlich noch durch 1 bis 3 Heteroatome der dritten bis siebten Hauptgruppe des Periodensystems der Elemente, wie Stickstoff, Sauerstoff oder Schwefel, unterbrochen sein kann,

oder durch Verbindungen der Formel (II)

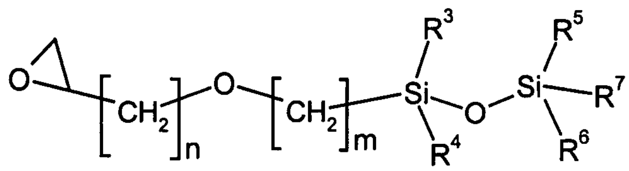

(II),

worin
$R^3$ bis $R^7$ gleich oder verschieden sind und für Wasserstoff, lineare oder verzweigte Alkylgruppen mit 1 bis 15 Kohlenstoffatomen, Arylgruppen mit 6 bis 10 Kohlenstoffatomen, Cycloalkylgruppen mit 5 bis 10 Kohlenstoffatomen, Aralkylgruppen mit 1 bis 4 Kohlenstoffatomen im Alkylteil und 6 bis 10 Kohlenstoffatomen im Arylteil stehen,
oder
worin
$R^3$ bis $R^7$ für den Rest

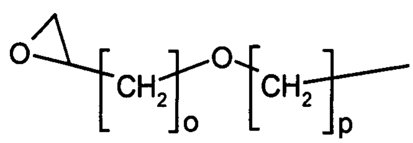

stehen und
n, m, o, p unabhängig voneinander für die Zahlen 1 bis 12 stehen,
ableiten,
wobei der Gehalt an funktionellen Endgruppen 40 bis 100 mol-%, bezogen auf die Gesamtzahl der vorhandenen Polymerketten, beträgt.

Bevorzugt besitzen die erfindungsgemäßen Polymere ein mittleres Molekulargewicht ($M_w$) von 1 000 bis 2 000 000, insbesondere von 100 000 bis 800 000.

Die Molekulargewichtsverteilung ($M_n/M_w$) liegt bevorzugt in einem Bereich von 1,3 bis 4, ganz besonders bevorzugt im Bereich von 1,5 bis 3,5.

Die erfindungsgemäß modifizierten Polymere besitzen insbesondere einen Gehalt an funktionellen Endgruppen von 50 bis 100 mol-%, ganz besonders bevorzugt von 70 bis 100 mol-%.

Die erfindungsgemäßen modifizierten Polymere besitzen - in Abhängigkeit von der Art der eingesetzten Modifizierungsagentien, der vorhandenen Reaktionsbedingungen und der gewählten Molverhältnisse von eingesetzten Modifizierungsagentien zu polymerisationsfähigen Monomeren einen Kopplungsgrad von etwa 10 bis 20 %, bevorzugt 12 bis 17 %, bezogen auf die Gesamtzahl der vorhandenen Polymerketten. Der Kopplungsgrad wird hervorgerufen durch eine lineare Kopplungsreaktionen der eingesetzten Modifizierungsagentien mit den vorhandenen Polymeranionen, welche zu einer Molekulargewichtsverkopplung beiträgt.

Der $T_g$-Wert der erfindungsgemäßen modifizierten Polymeren beträgt -10 bis -50°C, bevorzugt -15 bis -30°C.

Als konjugierte Diene, die zum Aufbau der erfindungsgemäßen Polymere dienen, können alle bekannten Diene eingesetzt werden, die für die Herstellung entsprechender Polymeranionen üblich sind. Beispielsweise sind zu nennen: 1,3-Butadien, 2,3-Dimethyl-1,3-butadien, 3-Butyl-1,3-optadien, Isopren, Pyperylen, 1,3-Hexadien, 1,3-Optadien, 2-Phenyl-1,3-butadien, bevorzugt 1,3-Butadien und Isopren sowie Mischungen derselben.

Als vinylaromatische Verbindungen kommen ebenfalls die bekannten vinylaromatischen Verbindungen in Betracht, die zusammen mit den konjugierten Dienen copolymerisiert werden können. Zu nennen sind beispielsweise: Styrol, p-Methyl, Styrol, α-Methylstyrol, 3,5-Dimethylstyrol, Vinylnaphthalin, p-tert-Butylstyrol, Divinylstyrol, Divinylethylen, 4-Propylstyrol, p-Tolylstyrol, 1-Vinyl-5-hexylnaphthalin, 1-Vinylnaphthalin oder Mischungen der genannten vinylaromatischen Verbindungen, bevorzugt Styrol, p-Methylstyrol und α-Methylstyrol, insbesondere Styrol.

Bei den Copolymerisaten beträgt der Anteil an vinylaromatischen Verbindungen üblicherweise 5 bis 55 Gew.-%, bevorzugt 10 bis 45 Gew.-%, und die Menge an konjugierten Dienen entsprechend 45 bis 95 Gew.-%, bevorzugt 55 bis 90 Gew.-%. Bei den Copolymeren kann es sich um ein statistisches, stufenblock- oder vollständiges Block-Copolymer der verschiedenen genannten Monomeren handeln.

Als Reste $R^1$ und $R^2$ in der oben genannten Formel (I) sind bevorzugt zu nennen: Wasserstoff, lineare oder verzweigte Alkylreste mit 1 bis 6 Kohlenstoffatomen, wie Methyl, Ethyl, Propyl, Butyl, Pentyl, Isopropyl, Isobutyl und Isopentyl, Arylreste mit 6 bis 10 Kohlenstoffatomen, wie Phenyl, Naphtyl und Xylyl, Alkylarylreste mit 1 bis 4 Kohlenstoffatomen im Alkylteil und 6 bis 10 Kohlenstoffatomen im Arylteil, wie Methyl, Ethyl, Propyl, Butyl, Pentyl, Isopropyl, Isobutyl, Isopentyl im Alkylteil und Phenyl, Naphtyl und Xylyl im Arylteil, sowie Verbindungen, worin $R^1$ und $R^2$ zusammen mit Stickstoff einen heterocyclischen Ring bilden, der 2 bis 10 Kohlenstoffatome enthält, und zusätzlich mit Sauerstoff, Stickstoff oder Schwefel, insbesondere mit Sauerstoff, einfach unterbrochen ist, sowie Cycloalkylgruppen mit 5 bis 7 Kohlenstoffatomen, wie Cyclopentyl und Cyclohexyl. Besonders bevorzugt kommen als Reste $R^1$ und $R^2$ der Formel (I) in Betracht: Methyl, Ethyl, Isopropyl, Phenyl, Cyclohexyl, Isobutyl sowie Verbindungen, worin $R^1$ und $R^2$ zusammen mit dem Stickstoff der Formel (I) einen heterocyclischen Ring bilden, wie einen Morpholin-, 1-Pyrrolidin-, 2,3-Dioxo-4-Ethyl-1-piperazin-Ring.

Selbstverständlich können die Verbindungen der Formel (I) durch Alkylreste mit 1 bis 4 Kohlenstoffatomen, wie Methyl, Ethyl, Propyl und Isopropyl, substituiert sein, insbesondere in ein- oder zweifacher Weise.

Bevorzugt dienen zur Modifizierung der Polymere die formelmäßig nachstehend aufgezählten Verbindungen der Formel (I):

Bis-(1-Methylpropyl)carbamidsäurechlorid

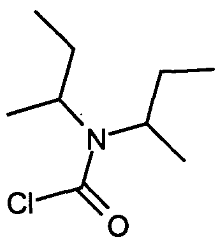

4-Morpholincarbonylchlorid

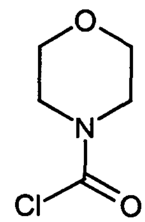

1-Pyrrolidincarbonylchlorid

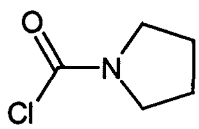

N,N- Dimethylcarbamidsäurechlorid

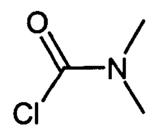

N,N-Diethylcarbamidsäurechlorid

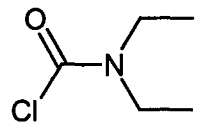

Als bevorzugte Reste $R^3$ bis $R^7$ der Formel (II) kommen die bereits für die Formel (I) in bevorzugter Weise erwähnten Reste $R^1$ und $R^2$ in Betracht. Zusätzlich ist der in der Formel (II) bereits erwähnte Epoxyether-Rest bevorzugt. Bevorzugte Zahlen für n, m, o und p der Formel (II) sind 1 bis 10.

Als Reste $R^3$ bis $R^7$ der Formel (II) sind ganz bevorzugt die Alkylreste, wie der Methyl-, Ethyl-, Propyl-, Isopropyl-, Butyl-, Isobutyl- sowie der Pentyl- und Isopentylrest.
Ebenfalls ganz besonders bevorzugt sind Verbindungen der Formel (II), in denen der Rest $R^7$ für den oben näher bezeichneten Epoxyether-Rest steht.
Nachstehend werden formelmäßig die bevorzugten Epoxysilylether der Formel (II) aufgezählt:

1,3-Bis-(glycidyloxypropyl)-tetramethyldisiloxan

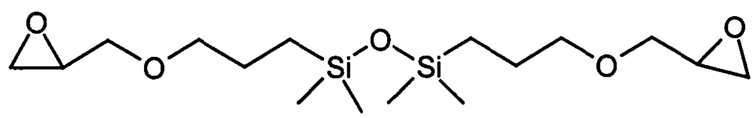

und

(3-Glycidyloxypropyl)-pentamethyldisiloxan

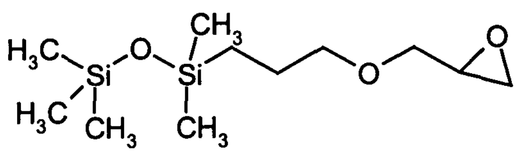

Selbstverständlich ist es möglich, bei der Modifizierung der Polymere die Verbindungen der Formel (I) und (II) in einem beliebigen Gemisch untereinander einzusetzen, so dass Polymere mit entsprechenden gemischten funktionellen Endgruppen entstehen.
Ein weiterer Gegenstand der vorliegenden Erfindung ist ein Verfahren zur Herstellung von durch funktionelle Endgruppen modifizierte Polymere auf Basis von konjugierten Dienen oder von konjugierten Dienen und vinylaromatischen Verbindungen mit dem zuvor genannten mittleren Molekulargewicht, der genannten Molekulargewichtsverteilung und dem genannten Gehalt an funktionellen Endgruppen, das dadurch gekennzeichnet ist, dass man konjugierte Diene oder konjugierte Diene und vinylaromatische Verbindungen in einem inerten organischen Lösungsmittel in Gegenwart eines Alkalimetalls und/oder Erdalkalimetall-Katalysators umsetzt und anschließend das anionische Alkalimetall- und/oder Erdalkalimetall-terminierte Polymere mit mindestens einer der zuvor genannten Verbindungen der Formel (I) und/oder (II) umsetzt, wobei die Verbindungen der Formel (I) und/oder (II) in Mengen von 0,1 bis 10 mol, bezogen auf 1 mol des eingesetzten Initiators, eingesetzt werden.
Die Polymerisation der konjugierten Diene oder der konjugierten Diene mit den vinylaromatischen Verbindungen (Copolymerisation) findet in einem inerten, aprotischen, organischen Lösungsmittel statt, wie beispielsweise parafinische Kohlenwasserstoffe, z.B. isomere Pentane, Hexane, Heptane, Octane, Decane, 2,4-Trimethylpentan, Cyclopentan, Cyclohexan, Methylcyclohexan, Ethylcyclohexan oder 1,4-Dimethylcyclohexan oder aromatische Kohlenwasserstoffe, wie Benzol, Toluol, Ethylbenzol, Xylol, Dimethylbenzol oder Propylbenzol. Diese Lösungsmittel können einzeln oder in Mischung untereinander eingesetzt werden. Bevorzugt werden Cyclohexan und n-Hexan als Lösungsmittel eingesetzt.
Gegebenenfalls kann den genannten aprotischen Lösungsmitteln bei der Copolymerisation von vinylaromatischen Verbindungen mit den konjugierten Dienen zur Steigerung der Polymerisationsgeschwindigkeit und/oder zur Modifizierung der Polymerstrukturen ein polares Lösungsmittel zugesetzt werden. Zu den geeigneten polaren Lösungsmitteln gehören Ether, wie Tetrahydrofuran, Diethylether, Cycloallylether, Dipropylether, Ethylendimethylether, Ethylendiethylether, Diethylenclykol, Dimethylether, tert.-Butoxydethoxyethan oder Bis-(2-dimethylaminoethyl)-ether, vorzugsweise tert.-Butoxyethoxyethan oder Bis-(2-dimethylaminoethyl)-ether, sowie tertiäre Amine, wie Trimethylamin, Triethylamin, Tripropylamin oder Tetramethylethylendiamin, vorzugsweise Triethylamin oder Tetramethylethylendiamin. Mit der Zugabe vom polaren Lösungsmittel kann zudem die Mikrostruktur der entsprechenden Copolymerisate geändert werden, beispielsweise von Stufenblock zu statistisch. Die zur Polymermodifizierung einzusetzenden polaren Lösungsmittel werden bei der anionischen Polymerisation im allgemeinen in Mengen von 0,1 bis 40 mol, bevorzugt 0,1 bis 10 mol, bezogen auf 1 mol des eingesetzten Alkalimetall- beziehungsweise Erdalkalimetall-Katalysators eingesetzt.

Die Menge an einzusetzendem Lösungsmittel kann in weiten Bereichen variieren. Sie beträgt üblicherweise etwa 300 bis 1500 Gew.-Teile pro Gew.-Teil Gesamtmonomere.

Die Herstellung der erfindungsgemäß modifizierten Polymere erfolgt in zwei Schritten. Beim ersten Schritt wird ein lebendes, anionisches Alkalimetall beziehungsweise Erdalkalimetall-terminiertes Polymer hergestellt, welches im zweiten Schritt mit den vorstehend definierten, erfindungsgemäßen Verbindungen der Formel (I) und (II) in der Endgruppe verknüpft wird.

Der erste Schritt der Herstellung der erfindungsgemäßen Polymere wird im allgemeinen so durchgeführt, dass bevorzugt ein Alkalimetallinitiatorsystem mit dem jeweiligen Monomer oder dem Monomergemisch umgesetzt wird, um die lebenden anionischen Polymere zu bilden. Dieser Polymerisationsschritt lässt sich in einem Schritt oder in einer Abfolge von Schritten durchführen. Ist die polymere Kette ein Homopolymer oder ein statistisches- oder Stufencopolymer aus zwei oder mehr Monomeren, so werden die Monomere gleichzeitig mit dem Alkalimetall-Katalysator polymerisiert. Ist die Polymerkette ein Block Copolymer, das zwei oder mehr Homo- oder Copolymerblöcke umfasst, so lassen sich die einzelnen Blöcke in inkrementeller oder aufeinander folgender Monomerzugaben erzeugen.

Als Alkalimetall- beziehungsweise Erdalkalimetall-Katalysatoren können beispielsweise eingesetzt werden Lithium, Natrium, Kalium, Rubithium, Cäsium, Berilium, Magnesium, Kalzium, Strontium, Barium, bevorzugt wird Lithium eingesetzt.

Darüber hinaus werden bevorzugt auf Alkalimetall-basierende Initiatorsysteme (Katalysatorsysteme), die Alkalimetall-Verbindungen der allgemeinen Formel

$$R^1\text{-}M$$

worin

$R^1$ ein Hydrocarbonylrest mit 1 bis 20 Kohlenstoffatomen und
M ein aus Lithium, Natrium, Kalium, Rubithium oder Cäsium ausgewähltes Alkalimetall ist,
darstellen,
eingesetzt.

Beispiele für derartige Initialsysteme sind Methyllithium, Isopropyllithium, n-Butyllithium, s-Butyllithium, Isobutyllithium, tert.-Butyllithium, tert.-Octyllithium, Hexyllithium, n-Undecyllithium, Phenyllithium, Naphthyllithium, p-Tolyllithium, 4-Phenylbutyllithium, Cyclohexyllithium und 4-Cyclohexylbutyllithium.

Die Menge der einzusetzenden Alkalimetalle, Erdalkalimetalle oder Alkalimetallverbindungen richtet sich nach den gewünschten Eigenschaften des Polymers, insbesondere nach dem gewünschten Molekulargewicht. Normalerweise werden die Alkalimetallverbindungen im Bereich von 0,2 bis 20 mmol/100 g der insgesamt eingesetzten Monomere eingesetzt.

Die Polymerisationstemperatur kann in weiten Bereichen schwanken und liegt im allgemeinen im Bereich von 0°C bis 200°C, bevorzugt bei 40°C bis 130°C. Die Reaktionszeit schwankt ebenfalls in breiten Bereichen von wenigen Minuten bis zu einigen Stunden. Üblicherweise wird die Polymerisation innerhalb einer Zeitspanne von etwa 30 Minuten bis zu 8 Stunden, bevorzugt 4 Stunden, durchgeführt. Sie kann sowohl bei Normaldruck als auch bei erhöhtem Druck (bis 10 bar) durchgeführt werden.

Bei Durchführung des zweiten Reaktionsschrittes werden die erhaltenen anionischen Alkalimetall- und/oder Erdalkalimetall-terminierten Polymere mit mindestens einer der genannten Verbindungen der Formel (I) und (II), d.h. den Modifizierungsagentien, umgesetzt, wobei in bevorzugter Weise die Verbindungen der Formel (I) und (II) in Mengen von 0,5 bis 4 mol, bezogen auf 1 mol des eingesetzten Initiators eingesetzt werden.

Bei dieser sogenannten Endgruppenmodifizierung ist darauf zu achten, dass störende Verbindungen, die die Endgruppenmodifizierung beeinträchtigen können, nicht vorhanden sind. Solche störenden Verbindungen sind z.B. Kohlendioxyd, Sauerstoff, Wasser, Halogenide, Alkohole sowie organische und anorganische Säuren und sonstige protische organische Substanzen.

Die Verknüpfungsreaktion (d.h. die Modifizierungsreaktion) wird üblicherweise bei Temperaturen durchgeführt, die in etwa den Temperaturen der Polymerisationsreaktion entsprechen. Dies bedeutet, dass die Verknüpfungsreaktion bei Temperaturen von etwa 0°C bis 200°C, vorzugsweise 50°C bis 120°C durchgeführt wird. Die Verknüpfungsreaktion kann ebenfalls bei Normaldruck wie auch bei erhöhtem Druck (1 bar bis 10 bar) durchgeführt werden.

Die Verknüpfungsreaktion ist relativ kurz. Sie liegt im Bereich von etwa 1 Minute bis 1 Stunde.

Nach der Verknüpfungsreaktion werden die nunmehr erhaltenen in der Endgruppe modifizierten Polymere gewonnen, indem man die Reaktionsmischung mit Abbruchreagenzien behandelt, die aktiven Wasserstoff enthalten. Solche Abbruchreagenzien sind beispielsweise Alkohole oder Wasser oder deren Gemische. Darüber hinaus ist es

von Vorteil, wenn der Reaktionsmischung Antioxidantien zugesetzt werden, bevor das verknüpfte Polymer isoliert wird.

Die Abtrennung des erfindungsgemäßen Polymers erfolgt in üblicher Weise, etwa durch Wasserdampfdestillation oder Ausflockung mit einem geeigneten Ausflockungsmittel, wie Alkohol. Das ausgeflockte Polymer wird dann beispielsweise durch zentrifugieren oder extrudieren aus dem resultierenden Medium entfernt. Restliches Lösungsmittel und andere flüchtige Bestandteile lassen sich durch Erwärmen, gegebenenfalls unter vermindertem Druck oder in einem Gebläse-Luftstrom, aus dem isolierten Polymer entfernen.

Die Herstellung der erfindungsgemäßen Polymere kann sowohl in diskontinuierlicher als auch in kontinuierlicher Fahrweise erfolgen. Bevorzugt ist die kontinuierliche Fahrweise in einer Reaktionskaskade, bestehend aus mehreren, bevorzugt mindestens zwei, insbesondere 2 bis 4, in Reihe geschalteten Reaktoren.

Wie zuvor bereits erwähnt, werden bei der Verknüpfung der Polymeranionen mit den beschriebenen Modifizierungsagentien auch in einem gewissen Grade (etwa 10 bis 20 %, bezogen auf die Gesamtzahl der vorhandenenen Polymerketten) gekoppelte Polymere erhalten, deren Kopplungsgrad - wie ebenfalls zuvor erläutert - von den eingesetzten Modifizierungsagentien, von den gewählten Molverhältnissen zwischen Modifizierungsagentien und Monomeren sowie von gewählten den Reaktionsbedingungen abhängt.

Selbstverständlich können den erfindungsgemäßen Polymeren noch die üblichen Compoundierkomponenten, wie Füllstoffe, Farbstoffe, Pigmente, Erweichungsmittel und Verstärkungsmittel zugesetzt werden. Darüber hinaus die bekannten Kautschukhilfsmittel und Vernetzungsmittel, wie in "Handbuch für die Gummiindustrie", 2. Ausgabe, 1991, Herausgeber: Bayer AG, beschrieben.

Die erfindungsgemäßen durch funktionelle Endgruppen modifizierte Polymere können in bekannter Weise zur Herstellung von Kautschukformkörpern aller Art verwendet werden, insbesondere zur Herstellung von Reifen und Reifenbauteilen, von Golfbällen und anderen technischen Gummiartikeln, als auch zur Herstellung von kautschukverstärkten Kunststoffen, wie ABS- und HIPS-Kunststoffen.

Darüber hinaus ist es möglich, die erfindungsgemäßen durch funktionelle Endgruppen modifizierten Polymere mit anderen Kautschuken wie Naturkautschuk oder anderen synthetischen Kautschuken, wie Polybutadien und SBR, abzumischen, um - je nach Verwendungszweck - die günstigsten physikalischen Eigenschaften der Kautschukformkörper zu erreichen.

Das günstigste Mischungsverhältnis kann dabei entsprechend dem Verwendungsziel leicht durch Vorversuche bestimmt werden. Üblicherweise werden die genannten nicht modifizierten Kautschuke in Mengen von etwa 1 bis 50 Gewichtsteilen pro 100 Gewichtsteile der Gesamt-Kautschukmischung zugegeben.

Selbstverständlich ist es auch möglich, die in erfindungsgemäßer Weise modifizierten Polymere mit anderen, bekannten, in der Endgruppe modifizierten Polymere abzumischen, wobei die bekannten, in der Endgruppe modifizierten Polymere in Mengen von etwa 1 bis 50, bevorzugt 5 bis 45 Gew.-Teilen pro 100 Gew.-Teile der Gesamt-Kautschukmischung eingesetzt werden. Andere in der Endgruppe modifizierten Polymere sind beispielsweise bekannt aus Houben-Weyl; Methoden der organischen Chemie; 4. Auflage Band E20, Makromolekulare Stoffe, S. 129 ff. und 1994 ff.; Georg-Thieme Verlag Stuttgart-New York 1986. Dabei kann die Endgruppe modifiziert werden durch Umsetzung der Polymeranionen mit Alkoholen, Aldehyden, Ketonen, Aminen, zinnorganischen Verbindungen oder Isocyanaten.

## Beispiele

### Beispiel 1

Herstellung eines endgruppenmodifizierten Styrol-Butadien-Copolymers mit N,N'-Dimethylcarbamidsäurechlorid als Modifizierungsmittel

In einem mit Stickstoff gespülten und mit einem Rührer versehenen Autoklaven wurden 8 500 g technisches Hexan vorgelegt. Danach wurde unter Rühren zu dem vorgelegten Hexan 49,90 mmol tert.-Butoxy-ethoxyethan, 0,94 mmol Kaliumtert.amylat und 17 mmol n-Butyllithium (BuLi) gegeben. Zu diesem Gemisch wurde dann 1 200 g getrocknetes, destabilisiertes 1,3-Butadien und 345 g getrocknetes, destabilisiertes Styrol zudosiert. Die Polymerisation der Monomere wurde bei einer Temperatur von 70°C bis zum vollständigen Umsatz des Monomers geführt. Anschließend wurde in situ 17 mmol N,N'-Dimethylcarbamidsäurechlorid zudosiert und 30 min bei 70°C nachgerührt. Danach wurde der Reaktorinhalt abgekühlt und die Reaktion mit Ethanol abgestoppt. Das erhaltene Produkt wurde anschließend mit Vulkanox® BHT stabilisiert und bei 60°C im Trockenschrank getrocknet.

**Beispiel 2**

Herstellung eines endgruppenmodifizierten Styrol-Butadien-Copolymers mit 1,3-Bis--(3-glycidyloxypropyl)-tetramethyldisiloxan als Modifizierungsmittel

In einem mit Stickstoff gespülten und mit einem Rührer versehenen Autoklaven wurden 8 500 g technisches Hexan vorgelegt. Danach wurde unter Rühren zu dem vorgelegten Hexan 49,90 mmol tert.-Butoxy-ethoxyethan, 0,94 mmol Kaliumtert.amylat und 17 mmol n-Butyllithium (BuLi) gegeben. Zu diesem Gemisch wurde dann 1 200 g getrocknetes, destabilisiertes 1,3-Butadien und 345 g getrocknetes, destabilisiertes Styrol zudosiert. Die Polymerisation der Monomere wurde bei einer Temperatur von 70°C bis zum vollständigen Umsatz des Monomers geführt. Anschließend wurde in situ 17 mmol 1,3-Bis-(3-glycidyloxypropyl)-tetramethyldisiloxan zudosiert und 30 min bei 70°C nachgerührt. Danach wurde der Reaktorinhalt abgekühlt und die Reaktion mit Ethanol abgestoppt. Das erhaltene Produkt wurde anschließend mit Vulkanox® BHT stabilisiert und bei 60°C im Trockenschrank getrocknet.

Die physikalischen Parameter des erhaltenen Copolymers sind in der nachstehenden Tabelle aufgeführt.

Die Polymeranalytik der erhaltenen modifizierten Polymere ergab folgende Daten:

| | *ML1+4 @100°C* | *Styrol [Gew.%]* | *1,4-cis [Gew.%]* | *1,4-trans [%]* | *Vinyl [Gew.%]* | *$T_g$ [°C]* | *L-Wert vor Modifizierung* | *L-Wert nach Modifizierung* | *GPC* | |
|---|---|---|---|---|---|---|---|---|---|---|
| | | | | | | | | | $M_W$ [g/mol] | Polydispersion |
| **Beispiel 1** | 57 | 19,8 | 12,1 | 16,2 | 52,0 | -23,5 | 212 | 248 | 333390 | 1,5 |
| ***Beispiel 2*** | 60 | 19,3 | 12,2 | 16,2 | 52,4 | -24,2 | 196 | 249 | 362029 | 1,6 |
| ***Referenz*** | 58 | 19,3 | 12,5 | 16,9 | 51,3 | -24,2 | 191 | 191 | 305705 | 1,3 |

| | *GPC* | | *Elementar-analyse* | *Kopplungs-ausbeute nach GPC* |
|---|---|---|---|---|
| | *$M_W$ [g/mol]* | *Polydispersion* | | |
| **Beispiel 1** | 333390 | 1,5 | 152ppm (N) | 20% |
| ***Beispiel 2*** | 362029 | 1,6 | 220ppm (Si) | 34% |

ML 1+4: Mooneywerte

GPC: Gelpermeationschromatographie,

$M_W$: mittleres Molekulargewicht, Polydispersion = $\frac{M_w}{M_n}$

L-Wert: Viskositätszahl (0,5g Polymer/100ml Toluol)

Auswertung erfolgt nach: $$L = \left(\frac{t}{t_0} - 1\right) \cdot 200$$ mit t = Durchflusszeit der Polymerlösung in sec.

$t_0$ = Durchflusszeit des Lösemittels in sec.

Mikrostruktur bestimmt nach Infrarotspektroskopie

$T_g$: Glasübergangstemperatur nach DSC (**D**ifferental **S**canning **C**alometry)

Referenz: Styol-Butadien Copolymer ohne Endgruppenfunktionalisierung analog der Rezeptur Beispiel 1 hergestellt.

In den nachstehenden Tabellen sind die Eigenschaften von Ruß-gefüllten und Kieselsäure-gefüllten Vulkanisaten aufgelistet mit erfindungsgemäßen Polymeren und Polymeren, die nur gekoppelt aber nicht Endgruppen modifiziert waren (nicht erfindungsgemäß)

| Rußmischungen | | | |
|---|---|---|---|
| | Referenz | Beispiel 1 | Beispiel 2 |
| Referenz nach Stand der Technik | 60 | | |
| Polymer Beispiel 1 | | 60 | |
| Polymer Beispiel 2 | | | 60 |
| Buna CB 25® | 40 | 40 | 40 |
| Ruß N 234 | 50 | 50 | 50 |
| Mineralöl* | 5 | 5 | 5 |
| ZnO RS | 3 | 3 | 3 |
| Stearinsäure | 2 | 2 | 2 |
| Antilux 654®** | 1,5 | 1,5 | 1,5 |
| Vulkanox HS®**** | 1 | 1 | 1 |
| Vulkanox 4020®*** | 1 | 1 | 1 |
| Vulkacit CZ®****** | 1,4 | 1,4 | 1,4 |
| Vulkacit D®******* | 0,3 | 0,3 | 0,3 |
| Schwefel | 1,8 | 1,8 | 1,8 |
| Mischungseigenschaften, DIN 53523 | | | |
| ***Mooney Viskosität* ML1+4@100°C** | 81 | 79 | 81 |
| ***Vulkanisateigenschaften, ISO 37*** | | | |
| Festigkeit, MPa | 21,08 | 20,328 | 19,35 |
| Bruchdehnung, % | 392 | 386 | 378 |
| Spannungswert 100%, MPa | 2,88 | 2,63 | 2,85 |
| Spannungswert 300%, MPa | 13,76 | 14,38 | 14,07 |
| Verstärkungsgrad | 4,8 | 5,5 | 4,9 |
| Härte 23°C, Shore A | 65,7 | 63,9 | 64,6 |
| Härte 70°C, Shore A | 64 | 63 | 62,8 |
| Elastizität 23°C, % | 48 | 45,8 | 47,8 |
| Elastizität 70°C, % | 58,7 | 60,4 | 59,8 |
| **Roelig, 10 HZ, DIN 53513** | | | |
| tan delta 60°C | 0,129 | 1,122 | 0,123 |

Die erfindungsgemäßen Polymere bezeichnet als Beispiel 1 und Beispiel 2 zeigen gegenüber dem Polymer entsprechend dem Stand der Technik (Referenz) in typischen rußgefüllten Vulkanisaten für Reifenlaufflächen deutliche Vorteile im Verstärkungsgrad, der die Wechselwirkung des Polymeren mit dem Füllstoff veranschaulicht. Als Konsequenz führt dies zu einer Erhöhung der Elastizität insbesondere bei hohen Temperaturen (70°C) und zu einer Absenkung des tan delta nach Roelig bei 60°C, was der Fachmann mit einer Reduktion des Rollwiderstandes entsprechend hergestellter Reifen gleichsetzt.

| Kieselsäuremischungen | | | |
|---|---|---|---|
| | Referenz | Beispiel 1 | Beispiel 2 |
| Referenz nach Stand der Technik (gekoppelt) | 70 | | |
| Polymer Beispiel 1 | | 70 | |
| Polymer Beispiel 2 | | | 70 |
| Buna CB 25® | 30 | 30 | 30 |
| Mineralöl* | 37,5 | 37,5 | 37,5 |
| Vulkasil S®******** | 80 | 80 | 80 |
| Silan Si 69®********* | 6,4 | 6,4 | 6,4 |
| ZnO RS | 2,5 | 2,5 | 2,5 |
| Stearinsäure | 1 | 1 | 1 |
| Vulkanox HS®**** | 1 | 1 | 1 |
| Vulkanox 4020®*** | 1 | 1 | 1 |
| Vulkacit CZ®****** | 1,8 | 1,8 | 1,8 |
| Vulkacit D®******* | 2 | 2 | 2 |
| Schwefel | 1,5 | 1,5 | 1,5 |
| Mischungseigenschaften, DIN 53523 | | | |
| ***Mooney Viskosität ML1+4@100°C*** | 80,5 | 80,5 | 83,0 |
| ***Vulkanisateigenschaften, ISO 37*** | | | |
| Festigkeit, MPa | 16,8 | 18,3 | 18,5 |
| Bruchdehnung, % | 393 | 425 | 422 |
| Spannungswert 100%, MPa | 3,6 | 3,1 | 3,4 |
| Spannungswert 300%, MPa | 11,8 | 11,7 | 11,5 |
| Verstärkungsgrad | 3,3 | 3,8 | 3,4 |
| Härte 23°C, Shore A | 73 | 72 | 72 |
| Härte 70°C, Shore A | 71 | 71 | 71 |
| Elastizität 23°C, % | 37 | 39 | 41 |
| Elastizität 70°C, % | 55 | 56 | 58 |
| **Roelig, 10 HZ, DIN 53513** | | | |
| tan delta -20°C | 0,389 | 0,433 | 0,420 |
| 60 | 0,121 | 0,115 | 0,115 |

* Enerthene 1849-1, Mineralölweichmacher, Mobil Schmierstoff GmbH
** Lichtschutzwachs, Rhein Chemie Rheinau
*** Alterunsschutzmittel (6PPD), Bayer AG
**** Alterungsschutzmittel (TMQ), Bayer AG
****** Sulfenamid Beschleuniger (CBS), Bayer AG
******* Guanidin Beschleuniger (DPG), Bayer AG
******** Kieselsäure, Bayer AG
********* Silan, Degussa

In mit Kieselsäure gefüllten Vulkanisaten, zeigen die erfindungsgemäßen Polymere ebenfalls eine verbesserte Wechselwirkung mit dem Füllstoff, ausgedrückt durch erhöhte Verstärkungsgrade. Zusätzlich zu reduziertem Rollwiderstand (niedrigerer tan delta bei 60°C) sind mit dieser Art Laufflächenmischungen die Nässeeigenschaften

daraus hergestellter Reifen verbessert (erhöhter tan delta bei -20°C).

**Patentansprüche**

1. Durch funktionelle Endgruppen modifizierte Polymere auf Basis von konjugierten Dienen oder von konjugierten Dienen und vinylaromatischen Verbindungen mit einem mittleren Molekulargewicht ($M_w$) von größer als 10 000 g/mol, einer Molekulargewichtsverteilung ($M_n/M_w$) von 1,3 bis 5 und mit funktionellen Endgruppen, die sich von Verbindungen der Formel (I)

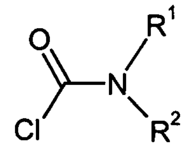

(I),

worin

$R^1$ und $R^2$ gleich oder verschieden sind und für Wasserstoff, für lineare oder verzweigte Alkylgruppen mit 1 bis 15 Kohlenstoffatomen, für Arylgruppen mit 6 bis 10 Kohlenstoffatomen, für Cycloalkylgruppen mit 5 bis 10 Kohlenstoffatomen, für Aralkylgruppen mit 1 bis 4 Kohlenstoffatomen im Alkylteil und 6 bis 10 Kohlenstoffatomen im Arylteil stehen oder worin
$R^1$ und $R^2$ zusammen mit dem Stickstoffatom einen heterocyclischen Ring bilden, der 2 bis 10 Kohlenstoffatome enthält, und zusätzlich noch durch 1 bis 3 Heteroatome der dritten bis siebten Hauptgruppe des Periodensystems der Elemente, wie Stickstoff, Sauerstoff oder Schwefel, unterbrochen sein kann,
oder durch Verbindungen der Formel (II)

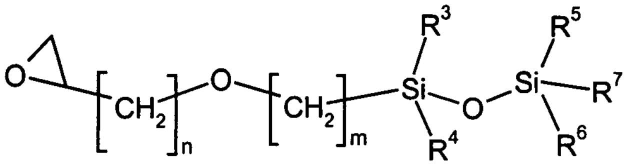

(II),

worin
$R^3$ bis $R^7$ gleich oder verschieden sind und für Wasserstoff, lineare oder verzweigte Alkylgruppen mit 1 bis 15 Kohlenstoffatomen, Arylgruppen mit 6 bis 10 Kohlenstoffatomen, Cycloalkylgruppen mit 5 bis 10 Kohlenstoffatomen, Aralkylgruppen mit 1 bis 4 Kohlenstoffatomen im Alkylteil und 6 bis 10 Kohlenstoffatomen im Arylteil stehen, oder
worin
$R^3$ bis $R^7$ für den Rest

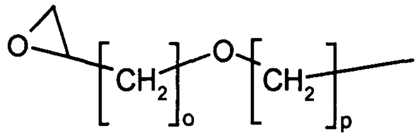

stehen und
n, m, o, p unabhängig voneinander für die Zahlen 1 bis 12 stehen,
ableiten,
wobei der Gehalt an funktionellen Endgruppen 40 bis 100 mol-%, bezogen auf die Gesamtzahl der vorhandenen Polymerketten, beträgt.

2. Verfahren zur Herstellung der modifizierten Polymere nach Anspruch 1, **dadurch gekennzeichnet, dass** man konjugierte Diene oder konjugierte Diene und vinylaromatische Verbindungen in einem inerten organischen Lösungsmittel in Gegenwart eines Alkalimetalls und/oder Erdalkalimetallkatalysators umsetzt und anschließend das anionische Alkalimetall- und/oder Erdalkalimetall-terminierte Polymere mit mindestens einer der in Anspruch 1 genannten Verbindungen der Formel (I) und/oder (II) umsetzt, wobei die Verbindungen der Formel (I) und/oder (II) in Mengen von 0,1 bis 10 mol, bezogen auf 1 mol des eingesetzten Initiators, eingesetzt werden.

3. Verwendung der Polymere nach Anspruch 1 zur Herstellung von Formkörpern aller Art, insbesondere zur Herstellung von Reifen und Reifenbauteilen.

Europäisches Patentamt

# EUROPÄISCHER RECHERCHENBERICHT

Nummer der Anmeldung
EP 02 02 6830

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| Y | EP 0 150 479 A (NIPPON ZEON CO., LTD.) 7. August 1985 (1985-08-07) * Seite 6, Zeile 24 - Seite 7, Zeile 30; Ansprüche 1-9 * | 1-3 | C08F8/30 C08F8/42 C08C19/42 |
| Y | EP 0 198 294 A (NIPPON ZEON CO., LTD.) 22. Oktober 1986 (1986-10-22) * Seite 2, Zeile 20 - Seite 3, Zeile 13; Ansprüche 1-9 * | 1-3 | |
| Y | EP 0 849 333 A (SUMITOMO RUBBER INDUSTRIES LTD.) 24. Juni 1998 (1998-06-24) * das ganze Dokument * | 1-3 | |
| A | EP 0 661 298 A (BRIDGESTONE CORPORATION) 5. Juli 1995 (1995-07-05) * Seite 13, Zeile 44 - Seite 14, Zeile 10; Ansprüche 1-33 * | 1 | |

RECHERCHIERTE SACHGEBIETE (Int.Cl.7)
C08F
C08C

Der vorliegende Recherchenbericht wurde für alle Patentansprüche erstellt

| Recherchenort | Abschlußdatum der Recherche | Prüfer |
|---|---|---|
| DEN HAAG | 28. März 2003 | Permentier, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR. EP 02 02 6830

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-03-2003

| Im Recherchenbericht angeführtes Patentdokument | Datum der Veröffentlichung | Mitglied(er) der Patentfamilie | Datum der Veröffentlichung |
|---|---|---|---|
| EP 150479 A | 07-08-1985 | JP 2046860 C | 25-04-1996 |
| | | JP 3078424 B | 13-12-1991 |
| | | JP 61042552 A | 01-03-1986 |
| | | JP 1049362 B | 24-10-1989 |
| | | JP 1720781 C | 14-12-1992 |
| | | JP 61103902 A | 22-05-1986 |
| | | JP 1826710 C | 28-02-1994 |
| | | JP 5030841 B | 11-05-1993 |
| | | JP 60137913 A | 22-07-1985 |
| | | DE 3482472 D1 | 19-07-1990 |
| | | EP 0150479 A2 | 07-08-1985 |
| | | US 4647625 A | 03-03-1987 |
| EP 198294 A | 22-10-1986 | JP 1057121 B | 04-12-1989 |
| | | JP 1572258 C | 25-07-1990 |
| | | JP 61225202 A | 07-10-1986 |
| | | CA 1267493 A1 | 03-04-1990 |
| | | DE 3661636 D1 | 09-02-1989 |
| | | EP 0198294 A1 | 22-10-1986 |
| | | US 4677153 A | 30-06-1987 |
| EP 849333 A | 24-06-1998 | JP 10176080 A | 30-06-1998 |
| | | DE 69704605 D1 | 23-05-2001 |
| | | DE 69704605 T2 | 02-08-2001 |
| | | EP 0849333 A1 | 24-06-1998 |
| | | US 5929149 A | 27-07-1999 |
| EP 661298 A | 05-07-1995 | JP 7233216 A | 05-09-1995 |
| | | JP 7233217 A | 05-09-1995 |
| | | DE 69417195 D1 | 22-04-1999 |
| | | DE 69417195 T2 | 29-07-1999 |
| | | DE 69430958 D1 | 14-08-2002 |
| | | DE 69430958 T2 | 23-01-2003 |
| | | EP 1199313 A2 | 24-04-2002 |
| | | EP 0661298 A2 | 05-07-1995 |
| | | EP 0773231 A2 | 14-05-1997 |
| | | ES 2128500 T3 | 16-05-1999 |
| | | ES 2179965 T3 | 01-02-2003 |
| | | US 5508333 A | 16-04-1996 |

EPO FORM P0461

Für nähere Einzelheiten zu diesem Anhang : siehe Amtsblatt des Europäischen Patentamts, Nr.12/82